# EUROPEAN PATENT APPLICATION

(11) **EP 2 068 062 A2**
(43) Date of publication of application: **10.06.2009**
(21) Application number: 08169303.8
(22) Date of filing: 17.11.2008
(51) Int. Cl.: F16L 3/12

(54) **Spacer-inner pipe connecting system**

(30) Priority: 16.11.2007 IT BO20070759
(71) Applicant: Vaillant Group Flues S.p.A. con Socio Unico, Orgiano (IT)
(72) Inventor: Cavicchioli, Paolo, 46030 San Giorgio di Mantova (IT); Trentin, Nicola, 36026 Pojana Maggiore (IT)
(74) Representative: Jorio, Paolo

(57) **Abstract**

A spacer-inner pipe connecting system having a spacer (1) in turn having a collar (8) fitted, in use, about an outer surface (2a) of an inner pipe (2), and at least two brackets (12) extending radially outwards from the collar (8) to fix an outer pipe; the inner pipe (2) has a first projection (3) extending from the outer surface (2a) and defining an axial stop for a seat (5) of the spacer (1); and the collar (8) has a radial projection (10) shaped to slip over the outside of the first projection (3) to allow the collar (8) to slip axially over the first projection to seat the spacer (1) inside the seat (5).

## Description

The present invention relates to a spacer-inner pipe connecting system.

As is known, concentrically connecting two pipes, such as boiler flue pipes, calls for the use of a spacer interposed between the two pipes to support them a predetermined distance apart. The spacer must therefore comprise a first portion contacting, in use, an outer surface of the inner pipe, and a second portion contacting, in use, an inner surface of the outer pipe.

The spacer is normally connected first to the outer pipe, and the inner pipe then inserted inside the spacer. Experience has shown the importance of the type of connection between the spacer and inner pipe, for the spacer to function properly and efficiently.

Accordingly, a strong demand exists among engineers in this particular field, for easy, reliable connection of the spacer to the inner pipe, and the possibility of rotating the inner pipe with respect to the spacer once the spacer is fitted to the pipe.

It is an object of the present invention to provide a spacer-inner pipe connecting system designed to meet the above demand.

According to the present invention, there is provided a spacer-inner pipe connecting system comprising a spacer having a collar fitted, in use, about an outer surface of an inner pipe, and at least two brackets extending radially outwards from the collar to fix an outer pipe; said connecting system **being characterized in that** said inner pipe comprises a first projection extending from said outer surface and defining an axial stop for a seat of said spacer; and **in that** said collar comprises a radial projection shaped to slip over the outside of said first projection to allow the collar to slip axially over the first projection to seat the spacer inside said seat.

A number of non-limiting embodiments of the invention will be described by way of example with reference to the accompanying drawings, in which:
Figure 1 shows a view in perspective of a first embodiment of the connecting system according to the present invention;
Figure 2 shows a topside view in perspective of the Figure 1 spacer;
Figure 3 shows an underside view in perspective of a second embodiment of the spacer of the connecting system according to the present invention.

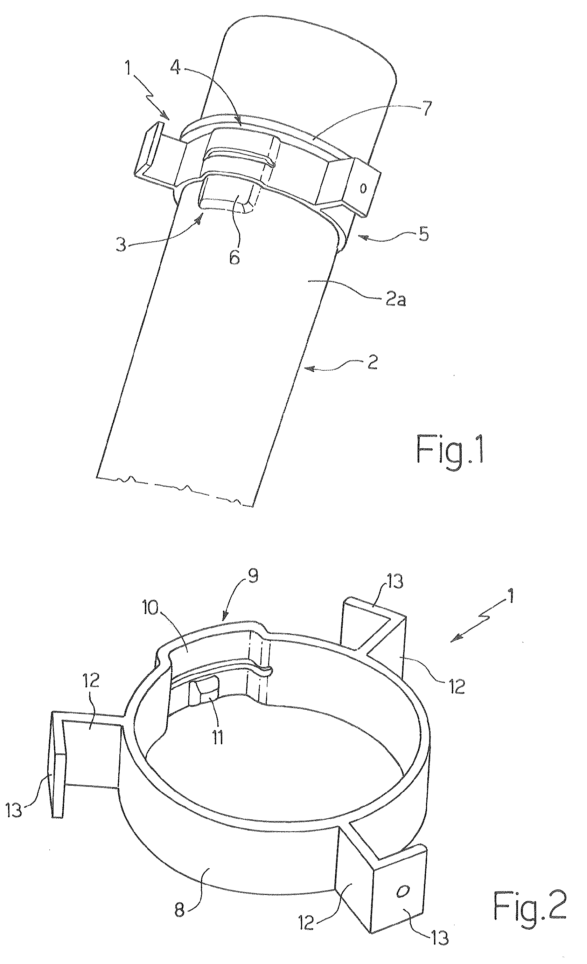

Figure 1 shows a spacer 1 and an inner pipe 2 in accordance with the present invention. Inner pipe 2 comprises a first relative stop projection and a second absolute stop projection 4, both extending from an outer surface 2a and defining between them an axial retaining seat 5 for spacer 1.

First projection 3 is defined by a rectangular-section parallelepiped 6, and second projection 4 by an annular projection 7. As described below, spacer 1 can slip over first projection 3, when a slipover portion of the spacer is aligned with first projection 3; but is locked axially by second projection 4, regardless of the position into which the spacer is rotated.

As shown in Figure 2, spacer 1 comprises a collar 8 fitted, in use, about outer surface 2a of pipe 2. Collar 8 comprises a slipover portion 9 defined by a larger-diameter radial projection 10 complementary in shape to first projection 3, so as to slip over the outside of first projection 3 to seat spacer 1 inside seat 5.

Spacer 1 comprises a forcing piece 11 extending inwards of collar 8 from radial projection 10, and which only allows slipover portion 9 to slip over first projection 3 by applying a certain amount of axial force. That is, whereas radial projection 10 slips over the outside of first projection 3, forcing piece 11 collides with first projection 3, and only by applying axial force can first projection 3 be overcome by elastic deformation of radial projection 10.

Spacer 1 comprises three brackets 12 extending radially outwards from and formed in one piece with collar 8, and each of which comprises a fastening portion 13 by which to fix an outer pipe (not shown for the sake of simplicity) to spacer 1.

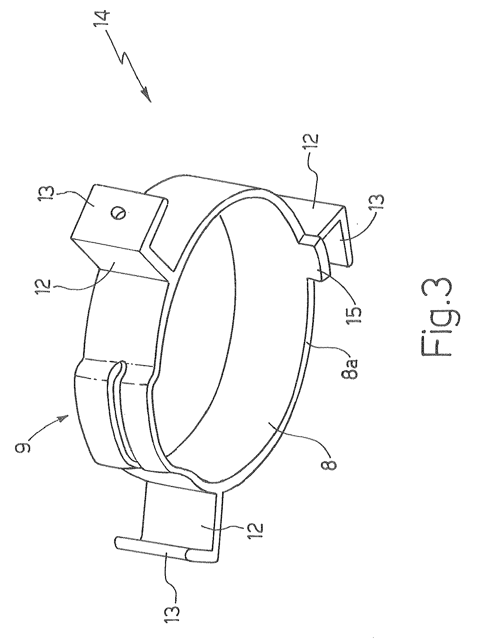

Number 14 in Figure 3 indicates as a whole a second embodiment of the spacer according to the present invention, any component parts of which identical to those of spacer 1 are indicated using the same reference numbers and with no further description.

Spacer 14 differs from spacer 1 by comprising a dog 15 formed in one piece with and projecting axially from an edge 8a of collar 8.

Dog 15 prevents spacer 1 from rotating a full 360° in either direction on inner pipe 2. That is, as the spacer rotates, dog 15 collides with first projection 3, thus preventing further rotation of the spacer.

As will be clear from the above description, besides enabling easy, efficient assembly of the spacer to the inner pipe, the connecting system according to the present invention also permits rotation of spacer 1, once assembled, about the inner pipe.

## Claims

1. A spacer-inner pipe connecting system comprising a spacer (1; 14) having a collar (8) fitted, in use, about an outer surface (2a) of an inner pipe (2), and at least two brackets (12) extending radially outwards from the collar (8) to fix an outer pipe; said connecting system **being characterized in that** said inner pipe (2) comprises a first projection (3) extending from said outer surface (2a) and defining an axial stop for a seat (5) of said spacer (1; 14); and **in that** said collar (8) comprises a radial projection (10) shaped to slip over the outside of said first projection (3) to allow the collar (8) to slip axially over the first projection to seat the spacer (1; 14) inside said seat (5).

2. A connecting system as claimed in Claim 1, **characterized in that** said spacer comprises a forcing piece (11) extending inwards of the collar (8) from said radial projection (10); said forcing piece being brought into contact with said first projection (3).

3. A connecting system as claimed in Claim 2, **characterized in that** said inner pipe (2) comprises a second projection (4) defined by an annular projection (7), and which, together with said first projection (3), defines the axial retaining seat (5) of said collar (8).

4. A connecting system as claimed in Claim 3, **characterized in that** said first projection (3) is a rectangular-section, parallelepiped-shaped member (6).

5. A connecting system as claimed in Claim 4, **characterized in that** said spacer (1) comprises a dog (15) extending axially from an edge (8a) of the collar (8); said dog (15) being brought into contact with said first projection (3) as said collar rotates (8).

6. A spacer (1; 14) for concentric pipes, the spacer comprising a collar (8) fitted, in use, about an outer surface (2a) of an inner pipe (2), and at least two brackets (12) extending radially outwards from the collar (8) to fix an outer pipe; said spacer **being characterized in that** said collar (8) comprises a radial projection (10) shaped to slip over the outside of a projection (3) extending from said outer surface (2a), so as to allow the collar (8) to slip axially over the projection and seat the spacer (1) inside a seat (5); and **by** comprising a forcing piece (11) extending inwards of the collar (8) from said radial projection (10); said forcing piece being brought into contact with said projection (3), and being slipped over it by elastic deformation of the radial extension (10) when axial force is applied.

7. A spacer (1; 14) for concentric pipes, as claimed in Claim 6, **characterized by** comprising a dog (15) extending axially from an edge (8a) of the collar (8); said dog (15) being brought into contact with said projection (3) as said collar (8) rotates.
